# EUROPÄISCHE PATENTANMELDUNG

(11) **EP 1 967 389 A1**
(43) Veröffentlichungstag der Anmeldung: **10.09.2008**
(21) Anmeldenummer: 08150438.3
(22) Anmeldetag: 21.01.2008
(51) Int. Cl.: B60C 9/20, B60C 9/26

(54) **Fahrzeugluftreifen und Verfahren zur Herstellung eines Gürtelverbandes eines Fahrzeugluftreifens**

(30) Priorität: 08.03.2007 DE 102007011291
(71) Anmelder: Continental Aktiengesellschaft, 30165 Hannover (DE)
(72) Erfinder: Walker, Hamish, 30974, Wennigsen (DE); Funk, Sascha, 30453, Hannover (DE); Ludwig, Reinhard, 31848, Nienstedt (DE); Peda, Karl, 31515, Wunstorf (DE)

(57) **Zusammenfassung**

Fahrzeugluftreifen in Radialbauart mit einem Laufstreifen und einem Gürtelverband mit zumindest zwei Lagen von im Kreuzverband angeordneten Stahlkorden (1a), wobei der Kreuzverband durch Spulen eines gummierten Stahlkordes (1) mittels über den Reifenumfang und parallel zueinander verlaufenden Wellenzügen ausgebildet wird.

## Beschreibung

Die Erfindung betrifft einen Fahrzeugluftreifen in Radialbauart mit einem Laufstreifen und mit einem Gürtelverband mit zumindest zwei Lagen von im Kreuzverband angeordneten Stahlkorden. Die Erfindung betrifft ferner ein Verfahren zur Herstellung eines Gürtelverbandes eines Fahrzeugluftreifens mit zwei Lagen von im Kreuzverband angeordneten Stahlkorden auf einer expandier- und einfahrbaren sowie rotierbaren Gürteltrommel.

Herkömmlich aufgebaute PKW-Reifen enthalten meist einen Gürtelverband, welcher aus zwei bis vier Lagen von in Gummi eingebetteten, in jeder Lage parallel zueinander verlaufenden Stahlkorden bestimmter Konstruktion besteht. Die Stahlkorde in den beiden Lagen bilden einen sogenannten Kreuzverband, da sie unter einem spitzen Winkel von üblicherweise 22° bis 32° zur Umfangsrichtung des Reifens verlaufen. Solche Gürtellagen werden aus Bahnen von gummierten Stahlkorden durch Zuschneiden hergestellt, die Schnittkanten bilden im fertigen Reifen die seitlichen Ränder der Gürtellagen. Es ist ferner bekannt und üblich, die Gürtellagen in PKW-Reifen mit einer Bandage abzudecken, welche in Umfangsrichtung verlaufende Festigkeitsträger, beispielsweise aus Polyamid oder Polyester, aufweist. Diese Bandage wird meist durch Spulen eines Streifens aus in eine Gummimischung eingebetteten Festigkeitsträgern über den aufgebauten Gürtelverband hergestellt. Man spricht daher auch von einer Spulbandage. Eine Vielzahl von Patenten und Patentanmeldungen befasst sich mit der Ausführung und Herstellung von solchen Spulbandagen. Aus der DE 42 12 296 A1 ist beispielsweise ein Fahrzeugluftreifen bekannt, bei dem die Spulbandage unter Zuhilfenahme einer achsparallel bewegbaren Führung mit Führungsrolle einer Verschiebevorrichtung durch aneinander gelegtes bzw. überlapptes Spulen auf den Gürtelverband unter einem Spulwinkel aufgelegt wird. Das Spulband wird an der Umkehrstelle um mindestens 180° gewendet, wobei eine Oberseitenvertauschung erfolgt, eine Faltstelle gebildet wird und durch Richtungsumkehr der Führungs-/Verschiebevorrichtung eine weitere Bandagenlage gebildet wird.

Aus der EP 0 916 522 A2 ist es bekannt, bei einem Reifen mit einem herkömmlich aufgebauten, insbesondere zweilagigen Gürtel die Radialkarkasse durch ein Ablegen bzw. Spulen einer oder mehrerer Verstärkungskorde aufzubauen. Auf diese Weise wird die Karkasse in zwei Teilen seitlich des Gürtelverbandes gebildet, die abgelegten bzw. gespulten Verstärkungskorde verlaufen bevorzugt in radialer Richtung.

Die an den Gürtelkanten herkömmlicher Gürtellagen befindlichen Enden der Stahlkorde sind oft Schwachstellen in Reifen, sie können sich lockern. Ihre Beweglichkeit kann zur Wärmeentwicklung im Reifenkörper beitragen, insbesondere bei höherer Fahrgeschwindigkeit. Ein gutes Einbinden der Gürtelkanten im Reifenkörper ist nicht nur für die Lebensdauer eines Reifens von Bedeutung sondern auch für seine Handlingeigenschaften, beispielsweise sein Verhalten in dynamischen Fahrsituationen, die Straßenlage und das Verhalten beim Wirken von Lenkkräften.

Der Erfindung liegt somit die Aufgabe zu Grunde, einen Gürtelverband derart auszuführen und herzustellen, dass er zur Sicherstellung einer guten Dauerhaltbarkeit und guter Handlingeigenschaften obige Nachteile nicht aufweist.

Bei erfindungsgemäß ausgeführten Fahrzeugluftreifen wird die gestellte Aufgabe dadurch gelöst, dass der Kreuzverband von den Abschnitten zwischen den Wendestellen von über den Reifenumfang und parallel zueinander verlaufenden Wellenzügen aus gummiertem Stahlkord gebildet ist.

In einem erfindungsgemäß ausgeführten Reifen bilden im Gürtelverband die Abschnitte von wellenförmig verlaufenden Stahlkorden einen Kreuzverband, wobei durch den wellenförmigen Verlauf an den Gürtelrändern die Umkehrstellen sind und somit freie Stahlkordenden wegfallen. Dadurch können die Dauerhaltbarkeit des Reifens, insbesondere im Hochgeschwindigkeitsbereich, erhöht und die Handlingeigenschaften verbessert werden.

Nach dem erfindungsgemäßen Verfahren lässt sich der Gürtelverband auf einfache Weise herstellen, indem über den Umfang der in Rotation versetzten Trommel gummierter Stahlkord in zueinander parallelen, voneinander beabstandeten Wellenzügen abgelegt wird, wobei die doppelte Amplitude der Wellenzüge der Gürtelbreite entspricht und die Wellenlänge den Winkel der entstehenden Stahlkordabschnitte relativ zur Umfangsrichtung bestimmt.

Durch die Wahl einer entsprechend großen Wellenlänge ergeben sich im Gürtel Festigkeitsträger, die unter einem vergleichsweise sehr kleinen Winkel von beispielsweise 18° zur Umfangsrichtung des Reifens verlaufen. Bei herkömmlich hergestellten Gürtellagen sind solche Winkel der Festigkeitsträger kaum erzielbar, da die üblichen Scheidmaschinen kalandrierte Materialbahnen unter solchen Winkeln nicht sauber schneiden können.

Bei einer bevorzugten Ausführungsform der Erfindung variiert die Amplitude der Wellenzüge geringfügig. Diese Variation wird durchgeführt, um an den Gürtelrändern Materialansammlungen im Bereich der Wendestellen der Wellen der Wellenzüge zu vermeiden.

Besondere Kreuzverbandmuster, die je nach Ausführung Einfluss auf die Handlingeigenschaften des Reifens nehmen, lassen sich dadurch erzeugen, dass Wellenzüge unterschiedlicher Wellenlängen vorgesehen sind. Bei der Herstellung des Reifens wird dabei derart vorgegangen, dass zumindest ein über den Reifenumfang verlaufender Wellenzug mit einer anderen Wellenlänge abgelegt wird als zumindest ein anderer über den Reifenumfang verlaufender Wellenzug. Variationen der Wellenlänge sollen dabei so durchgeführt werden, dass die Gleichförmigkeit des Reifens nicht beeinträchtigt wird.

Zum Aufbringen des gummierten Stahlkordes auf der Gürteltrommel kann auf bewährte Einrichtungen zurückgegriffen werden, insbesondere kann der gummierte Stahlkord von zumindest einem Spulkopf zumindest einer Spuleinrichtung, die herkömmlich ausgeführt sein können, abgespult werden.

Von Vorteil ist es ferner, wenn der gummierte Stahlkord auf eine mit einem haftenden Überzug, beispielsweise einer Gummimatte, versehene Trommelaußenfläche gespult wird.

Der nach dem erfindungsgemäßen Verfahren hergestellte Gürtelverband kann auf sehr einfache Weise mit einer Bandage aus in Umfangsrichtung umlaufenden Festigkeitsträgern komplettiert werden, indem der gummierte Stahlkord über die erstellten Wellenzüge in Trommelumfangsrichtung zur Bildung der Bandage, die ein- oder mehrlagig ausgeführt sein kann, spiralig weiter gewickelt wird.

Weitere Merkmale, Vorteile und Einzelheiten der Erfindung werden nun anhand der Zeichnung, die ein Ausführungsbeispiel darstellt, näher beschrieben. Dabei zeigen
Fig. 1 schematisch eine Draufsicht eines erfindungsgemäßen Gürtels aus gespultem Stahlkord und
Fig. 2 ein Detail aus Fig. 1 in vergrößerter Darstellung.

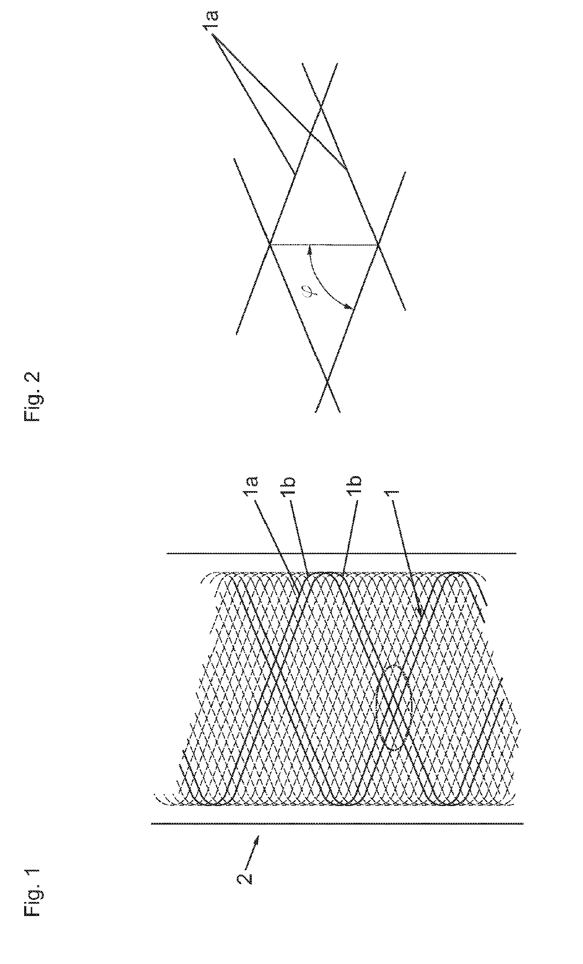

Ein Gürtelverband gemäß der vorliegenden Erfindung wird durch Spulen eines gummierten Stahlkordes 1 hergestellt. Ausgangsmaterial zur Herstellung des Gürtelverbandes ist ein Stahlkord der erwünschten Konstruktion, beispielsweise der Konstruktion 2 x 0,30 mm (bestehend aus zwei miteinander verdrillten Stahlfilamenten mit einem Durchmesser von jeweils 0,30 mm), welcher beispielsweise durch Umspritzen in einem Extruder gummiert wird und in entsprechend großer Länge aufgerollt zur Verfügung steht. Der Stahlkord 1 wird über eine nicht gezeigte Spuleinrichtung, welche einen beweglichen Spulkopf aufweist, auf einer ein- und ausfahrbare Segmente aufweisenden, außen zylindrischen und rotierbaren Trommel 2, die in Fig.1 lediglich angedeutet ist, nach einem bestimmten Spulmuster abgelegt. Wie Fig. 1 zeigt entspricht die Breite des gebildeten Spulmusters der Breite des gebildeten Gürtels. Das Ablegen des Stahlkordes 1 erfolgt zickzack- bzw. wellenförmig über den Umfang der rotierenden Trommel 2, beispielsweise mit konstanter Amplitude und konstanter Wellenlänge. Die doppelte Amplitude entspricht der Gürtelbreite, die Wellenlänge bestimmt den Winkel ϕ, den die einzelnen, zwischen den Wendestellen 1b verlaufenden Stahlkordabschnitte 1a im Gürtelverband innerhalb des Reifens mit der Umfangsrichtung einschließen. Das Spulen des Stahlkordes 1 wird nach dem erstmaligen wellenförmigen Ablegen des Stahlkordes über den kompletten Trommelumfang in einem Abstand zur ersten "Welle" fortgesetzt und so oft wiederholt bis der Stahlkord 1 gemäß dem Spulmuster einen Gürtelverband gebildet hat. Der Startpunkt des ersten Wellenzuges kann am Rand des Gürtelverbandes liegen, gegenüber dem Start punkt kann am zweiten Rand der Endpunkt dieses Wellenzuges liegen. Anfang und Ende können auch an anderen Stellen, beispielsweise in der Mitte, liegen. Die gestrichelten Linien in Fig. 1 deuten den fertigen Gürtelverband an, welcher einem aus dem Stand der Technik bekannten zweilagigen Gürtel mit Stahlkorden im Kreuzverband nachgebildet ist. Der gegenseitige Abstand der einzelnen Abschnitte 1a jedes Wellenzuges bestimmt den gegenseitigen Abstand der Stahlkordabschnitte 1a im fertigen Gürtel. Um Steifigkeitssprünge an den Rändern des entstehenden Gürtelverbandes zu vermeiden, kann während des Spulvorganges eine leichte Variation der Amplitude und damit der Gürtelbreite durchgeführt werden. Durch Änderung der Wellenlänge, wobei über den vollen Umfang die Wellenlänge jeweils gleich gelassen wird, lassen sich spezielle "Muster", beispielsweise analog zu einem Damastgewebe, herstellen.

Damit die auf der Trommel 2 abgelegten Stahlkord-Wellenzüge am Untergrund, der Trommel 2, haften, werden entsprechende Maßnahmen getroffen. So kann insbesondere vorgesehen sein, über den Trommelumfang eine Gummimatte zu legen, sodass durch die Eigenklebrigkeit der Stahlkordgummierung die Haftung zur Trommel 2 sichergestellt ist. Nach seiner Fertigstellung wird der Gürtelverband mit einer bereits hergestellten Reifenkarkasse, die in bekannter Weise aufgebaut sein kann, insbesondere eine Karkasseinlage mit in radialer Richtung verlaufenden Festigkeitsträgern enthält, verbunden. Dazu wird der Gürtelverband außen von einer Halteeinrichtung erfasst, die Segmente der Trommel 2 werden eingefahren, die Trommel 2 entfernt, innerhalb des Gürtelverbandes die bereits erstellte Reifenkarkasse positioniert, bombiert und derart mit dem Gürtelverband fest verbunden. Der Rohreifen wird anschließend auf eine übliche Weise mit einem Laufstreifen komplettiert und vulkanisiert.

Nach dem Spulen bzw. Erstellen des Gürtelverbandes mit im Kreuzverband verlaufenden Stahlkordabschnitten 1 kann der Spulvorgang in Gürtelumfangsrichtung, die der Umfangsrichtung des herzustellenden Reifen entspricht, fortgesetzt werden und derart durch ein in Umfangsrichtung erfolgendes spiraliges Wickeln des gummierten Stahlkordes eine oder mehrere Gürtelbandagenlage(n) erzeugt werden.

Die erfindungsgemäße Herstellung eines Gürtelverbandes eignet sich für alle Arten von Fahrzeugluftreifen, insbesondere für PKW-Reifen, für LKW-Reifen und für Zweiradreifen.

### Bezugszeichenliste

- 1: Stahlkord
- 1a: Stahlkordabschnitte
- 1b: Wendestellen
- 2: Trommel

## Patentansprüche

1. Fahrzeugluftreifen in Radialbauart mit einem Laufstreifen und einem Gürtelverband mit zumindest zwei Lagen von im Kreuzverband angeordneten Stahlkorden (1a),
**dadurch gekennzeichnet,**
**dass** der Kreuzverband von den Abschnitten (1a) zwischen den Wendestellen (1b) von über den Reifenumfang und parallel zueinander verlaufenden Wellenzügen aus gummiertem Stahlkord (1) gebildet ist.

2. Fahrzeugluftreifen nach Anspruch 1, **dadurch gekennzeichnet, dass** die Amplitude der Wellenzüge geringfügig variiert.

3. Fahrzeugluftreifen nach Anspruch 1 oder 2, **dadurch gekennzeichnet, dass** Wellenzüge unterschiedlicher Wellenlänge vorgesehen sind.

4. Verfahren zur Herstellung eines Gürtelverbandes eines Fahrzeugluftreifens mit zwei Lagen von im Kreuzverband angeordneten Stahlkorden (1a) auf einer expandier- und einfahrbaren sowie rotierbaren Gürteltrommel (2),
**dadurch gekennzeichnet,**
**dass** über den Umfang der in Rotation versetzten Trommel (2) gummierter Stahlkord (1) in zueinander parallelen, voneinander beabstandeten Wellenzügen abgelegt wird, wobei die doppelte Amplitude der Wellenzüge der Gürtelbreite entspricht und die Wellenlänge den Winkel (4) der entstehenden Stahlkordabschnitte (1a) relativ zur Umfangsrichtung bestimmt.

5. Verfahren nach Anspruch 4 **dadurch gekennzeichnet, dass** der gummierte Stahlkord (1) von zumindest einem Spulkopf zumindest einer Spuleinrichtung abgespult wird.

6. Verfahren nach Anspruch 4 oder 5, **dadurch gekennzeichnet, dass** die Amplitude der Wellenzüge über den Reifenumfang geringfügig variiert wird.

7. Verfahren nach einem der Ansprüche 4 bis 6, **dadurch gekennzeichnet, dass** zumindest ein über den Reifenumfang verlaufender Wellenzug mit einer anderen Wellenlänge abgelegt wird als zumindest ein anderer über den Reifenumfang verlaufender Wellenzug.

8. Verfahren nach einem der Ansprüche 4 bis 7, **dadurch gekennzeichnet, dass** der gummierte Stahlkord (1) auf eine mit einem haftenden Überzug, beispielsweise einer Gummimatte, versehene Trommelaußenfläche gespult wird.

9. Verfahren nach einem der Ansprüche 4 bis 8, **dadurch gekennzeichnet, dass** der gummierte Stahlkord (1) über die erstellten Wellenzüge in Trommelumfangsrichtung zur Bildung einer ein- oder mehrlagigen Bandage spiralig weiter gewickelt wird.
